# EUROPEAN PATENT SPECIFICATION

(11) **EP 3 034 906 B1**
(45) Date of publication and mention of the grant of the patent: **30.06.2021**
(21) Application number: 14199149.7
(22) Date of filing: 19.12.2014
(51) Int. Cl.: F16G 1/10, F16G 1/16, F16G 1/28, F16G 5/08, F16G 5/14, F16G 5/20

(54) **Belt comprising a textile covering**
Riemen mit einer Textilbespannung
Courroie comprenant un revêtement textile

(43) Date of publication of application: 22.06.2016
(73) Proprietor: ContiTech Antriebssysteme GmbH, 30165 Hannover (DE)
(72) Inventor: Schulte, Hermann, 30823 Garbsen (DE); Obert, Markus, 30457 Hannover (DE); Unruh, Axel, 30655 Hannover (DE); Gaska, Roman, 31319 Sehnde (DE)
(74) Representative: Continental Corporation

(56) References cited:
- EP-A1- 0 511 667
- EP-A1- 2 677 071
- EP-A2- 1 813 835
- EP-A2- 2 322 820
- WO-A1-03/031700
- WO-A1-2014/191723
- None

## Description

The invention relates to a power transmission belt having an elastic foundational body based on a thermoplastic elastomer or on a vulcanizate and having an belt surface bearing a textile covering.

A power transmission belt is exposed to dynamic stresses and thus also to wear as well as to some aggressive liquids like oil for example. The foundational body of a drive belt comprises a top ply as belt spine and a substructure with a force transmission zone. The following patent literature in particular is referenced for this: DE 38 23 157 A1, DE 10 2006 007 509 A1, WO 2005/080821 A1, WO 2006/066669 A1, US 3 981 206 and US 5 417 618. A drive belt has elasticity because the foundational body and thus the top ply and the substructure consist of a polymeric material having elastic properties, for which in particular the two groups of materials that are known as elastomers and thermoplastic elastomers (TPEs) are suitable here. Elastomers based on a vulcanized mixture of rubber are of particular importance.

The elastic foundational body further usually incorporates an embedded strength or tensile member, which may have one or more plies.

Drive belts in particular have a coating in the region of the force transmission zone in particular to reduce the friction on the working surface of the belt and support the teeth thereby reducing deformation and damage as well as enhanced abrasion resistance. This coating may be, for example, a flocked covering as described in DE 38 23 157 A1, or else a film covering as described in DE 10 2008 012 044 for example. It is similarly possible to use nonwovens where a loose fibrous web is thermally consolidated for example.

Typically, however, textile coverings are used as coating. Some textiles for the coating of belts are described in EP 2570529a1, EP 2570698 A1 or US 5,529,545, for instance. The yarns described have some disadvantages while using them wholly or partially immersed in oil. Besides that, there are relatively complex to manufacture and relatively expensive.

By use of a fabric with more than one type of yarn a preferred position of the media-resistant and high strength yarns can be effected. This preferred orientation of the yarn allows an optimized use of materials according to customer's requirement with regard to engine performance and media exposure.

Especially for toothed belts stretchable fabrics are used for the formation of the tooth. Standard method of preparation is the use of textured yarns.

If this is not possible due to the yarn properties, one often uses combinations with stretchable yarns such as elastane, described e.g. in JPS6483952(A). These yarns made partially of elastane do no longer meet modern requirements for durability, heat resistance and long life behavior of modern engines.

EP 1 813 835 A2 discloses a belt according to the preamble of claim 1.

The present invention therefore has for its object to provide a power transmission belt, comprising a textile covering with high durability, preferably when immersed in oil, excellent heat resistance and long life behavior. The whole belt should be in some way cost-effective and easy to produce.

This object is achieved when the belt, esp. the toothed belt, comprises at least one belt surface bearing a textile covering wherein the textile covering is a fabric comprising a plurality of first weft yarns interspersed with a plurality of second weft yarns, wherein the first weft yarns comprise a first resilient core and at least one synthetic fibre thread wrapped around the first resilient core to form a first covered yarn, and wherein the second weft yarns comprise a second resilient core and at least one resistant fibre thread wrapped around the second resilient core to form a second covered yarn, wherein the first covered yarn and/or the second covered yarn of the fabric is, or are, double covered yarn, the double covered yarn having an inner cover yarn and an outer cover yarn, and wherein the first inner cover yarn comprises the same material as the first outer cover yarn, and/or the second inner cover yarn comprises the same material as the second outer cover yarn.

The textile covering is preferably at least adhered to the working surface of the power transmission belt.

This new fabric is advantageous because providing two yarns interspersed in the fabric provides the benefit of both the resistant fibre thread and the synthetic fibre thread in a cost-effective and production-efficient manner.

The fabric is usually a woven fabric.

In a preferred embodiment, the at least one resistant fibre thread comprises a chemically resistant fibre thread. The preferred resistant fibre thread comprises an aromatic polyamide (i.e. an aramid). The aramid may be a meta-aramid, or a para-aramid or a copolymer aramid or a mixture of two or more types of aramid. Other chemically (or mechanically or heat) resistant fibres may also be suitable depending upon the particular application in which the fabric is to be used.

It is preferred if the synthetic fibre thread comprises a polyamide (e.g. Nylon), for example PA66.

Generally, the first resilient core will comprise a first elastomeric fibre and/or the second resilient core will comprise a second elastomeric fibre. Preferably, the first elastomeric fibre and/or the second elastomeric fibre each comprise polyurethane.

The structure of the yarns will usually be such that the first inner cover yarn is wrapped around the first resilient core in a first direction and the first outer cover yarn is wrapped around the first resilient core and the first inner cover yarn in a second, opposite direction. Similarly, the second inner cover yarn may be wrapped around the second resilient core in a first direction and the second outer cover yarn may be wrapped around the second resilient core and the second inner cover yarn in a second, opposite direction. The directions may be, for example, S and Z or Z and S.

Preferably, the first yarn will comprise a texturised synthetic fibre, more preferably false twist texturised synthetic fibre to bulk the yarn.

The first yarns may be interspersed with the second yarns in generally any suitable pattern and/or ratio. For example, the first yarn (e.g. of Nylon) may form two weft threads to one weft thread formed by the second yarn (e.g. of aramid), three weft threads of the first yarn to one weft thread formed by the second yarn, four weft threads of the first yarn to one weft thread formed by the second yarn, or five weft threads of the first yarn to one weft thread formed by the second yarn.

However, in a particular embodiment, the plurality of first yarns alternates with the plurality of second yarns (e.g. one weft of the first yarn alternating with one weft of the second yarn).

The wefts of the first yarn (e.g. polyamide) and/or the second yarn (e.g. aramid) may be interspersed using a double pick. For example, the first yarn (e.g. of Nylon) may form four weft threads to two weft threads formed by the second yarn (e.g. aramid), the first yarn (e.g. of Nylon) may form six weft threads to two weft threads formed by the second yarn (e.g. aramid), or the first yarn (e.g. of Nylon) may form eight weft threads to two weft threads formed by the second yarn (e.g. aramid).

In a further embodiment, the plurality of first yarns is inserted by a double pick with the plurality of second yarns also inserted by a double pick (e.g. two wefts of the first yarn alternating with two wefts of the second yarn).

It is advantageous if the fabric is woven in a faced-weave pattern. One way in which this may be accomplished is if the first yarn is woven in a first weave pattern and the second yarn is woven in a second weave pattern. The first weave pattern may comprise a plain weave pattern. An advantage of this is that a plain weave pattern aids in restricting extension to the correct range (i.e. it prevents or reduces the chances of the fabric from being too narrow).

Alternatively, a faced weave may be used in the first weave pattern for the first weft. This is advantageous because it achieves the effect of a (substantially) Nylon back, with (substantially) aramid face. The first weave pattern may, thus, comprise a plurality of floats. Thus, the first weave pattern may comprise e.g. a twill weave pattern (for example a 3×1 or 1×3 twill pattern).

It is preferred if the second weave pattern comprises a plurality of floats. This has the advantage that, when the second yarn is aramid, the floats cause the aramid wefts to bunch up after weaving and force the first yarn wefts (e.g. Nylon) to the back of the fabric. This results in a predominantly aramid face and a predominantly Nylon back to the fabric.

One suitable second weave pattern comprises a twill weave pattern, preferably a 1×3 twill.

Thus, the present invention accordingly provides, in a second aspect, a belt, esp. a toothed belt, containing at least one woven fabric comprising aromatic polyamide yarn and polyamide yarn, wherein the fabric has a weave pattern comprising a plurality of floats and wherein the fabric has a substantially aromatic polyamide face and a substantially polyamide back.

A faced woven fabric is advantageous because the expensive aramid material may be located on the working face of the fabric. The working face may be more exposed to the aggressive conditions including friction, oil, chemicals or high temperature present in the belt environment (if the fabric is used in a transmission belt e.g. a ribbed or V belt). Aramid is more resistant to these conditions than the Nylon material. The aramid will thus provide a layer of protection for the less chemically and condition resistant material, Nylon.

In addition, the back being predominantly Nylon is very advantageous because Nylon has better rubber adhesion properties than aramid (due to its more reactive chemical structure). Thus, if used in a transmission where the fabric is covered with rubber, the Nylon back adheres well to the rubber.

An adhesion promoter may additionally be provided to the fabric on the side which faces the belt side. The fabric may also be impregnated with a polymer solution, in particular from the aspect of changing the CoF value. Using a polymer layer, in particular a polymer film, preferably a polymer layer or film based on polyethylene, is also advantageous here.

The adhesion promoter and/or the polymer solution may further comprise a dry lubricant - especially to reduce the coefficient of friction in the case of the polymer solution. The dry lubricant is preferably a fluoropolymer, for example polytetrafluoroethylene (PTFE) and/or polyvinyl fluoride (PVF) and/or polyvinylidene fluoride (PVDF), of which polytetrafluoroethylene (PTFE) in particular is suitable.

The adhesion promoter and/or the polymer solution may further be rendered electrically conductive, in particular on the basis of carbon black and/or graphite and/or an added metal. The use of an electrically conductive carbon black is of particular importance here.

An additional coating may be provided on the external surface of the fabric. Preferably, however, the fabric is free from any additional coating.

The fabric is part of a power transmission belt which may be constructed as a flat belt, as a V-belt, as a V-ribbed belt, as a toothed belt, as a clutch belt or as an elevator belt.

The elastic foundational body of the power transmission belt is based on a thermoplastic elastomer or on a vulcanizate, in particular in the form of a vulcanized mixture of rubber, containing at least one rubber component and mixture ingredients. The rubber component used is in particular an ethylene-propylene copolymer (EPM), an ethylene-propylene-diene monomer copolymer (EPDM), (partly) hydrogenated nitrile rubber (HNBR), chloroprene rubber (CR), fluoro rubber (FKM), natural rubber (NR), styrene-butadiene rubber (SBR) or butadiene rubber (BR), which are used uncut or cut with at least one further rubber component, in particular with one of the aforementioned types of rubber, for example in the form of an EPM/EPDM or SBR/BR blend. EPM or EPDM or an EPM/EPDM blend is of particular importance here.

The mixture ingredients comprise at least one crosslinker or crosslinker system (crosslinking agent plus accelerator). Further mixture ingredients are usually a filler and/or a processing auxiliary and/or a plasticizer and/or an antioxidant and also optionally further added substances, for example fibers, like short fibers or staple fibers, and color pigments. The general state of the rubber mixture arts is referenced here.

The tensile members, which are part of the power transmission belt as well, might be formed as single cords. These single cords can be made out of steel, polyamide, aramid, polyester, glass fibers, polyetheretherketone (PEEK) or polyethylene 2,6-naphthalate (PEN), for example.

Exemplary embodiments of the invention will now be more particularly described with test results on a reference belt with serial fabric and on a belt with a fabric according to the invention.

### Accelerated durability test

### Pulley Test Rig OIL

### Technical data:

| | |
|---|---|
| > Speed at crank shaft: | 6000 rpm |
| > Temperature (oil / belt): | 130°C ± 2°C |
| > 3 Pulleys inside v layout: | Z1 = Z3 = 23 / Z2 = 46 |
| > Diameter back pulley: | 60 mm ± 0.1 mm |
| > Belt dimension: | 150 STD 8 - 12 |
| > Belt pitch: | t = 8 mm |
| > Axle load (continuous): | Fa = 400 N ± 20 N |
| > Belt load: | 9.5kW ± 0.3kW ≈ 516N |
| > Oil: | MW 16955 Fluid F |
| > Oil Contamination: | 2 1/min ± 0.3 1/min |

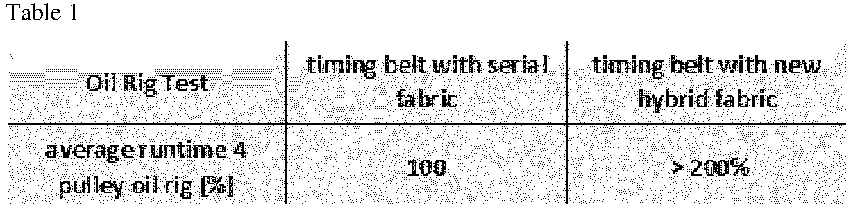

### Serial fabric:

Warp: Polyamide (PA6.6)
Weft: Elastane (400dtex) with counterrotate enwinded p-Aramide

### New hybrid fabric:

Warp: Polyamide (PA6.6)
Weft: alteration/variation of p-Aramide around Elastane and PA6.6 around Elastane

## Claims

1. A belt having an elastic foundational body based on at least one thermoplastic elastomer or on a vulcanizate and having an article surface bearing a textile covering, wherein the textile covering is a fabric comprising a plurality of first weft yarns interspersed with a plurality of second weft yarns, wherein the first weft yarns comprise a first resilient core and at least one synthetic fibre thread wrapped around the first resilient core to form a first covered yarn, and wherein the second weft yarns comprise a second resilient core and at least one resistant fibre thread wrapped around the second resilient core to form a second covered yarn, **characterised in that** the first covered yarn and/or the second covered yarn of the fabric is, or are, double covered yarn, the double covered yarn having an inner cover yarn and an outer cover yarn, and **in that** the first inner cover yarn comprises the same material as the first outer cover yarn, and/or the second inner cover yarn comprises the same material as the second outer cover yarn.

2. The belt as claimed in claim 1, **characterized in that** the at least one resistant fibre thread comprises a chemically resistant fibre thread, a mechanically resistant fibre thread and/or a heat resistant fibre thread.

3. The belt as claimed in any of claims 1 to 2, **characterized in that** the at least one resistant fibre thread comprises an aromatic polyamide.

4. The belt as claimed in any of claims 1 to 3, **characterized in that** the first resilient core comprises a first elastomeric fibre and/or the second resilient core comprises a second elastomeric fibre.

5. The belt as claimed in claim 1, **characterized in that** the first inner cover yarn is wrapped around the first resilient core in a first direction and the first outer cover yarn is wrapped around the first resilient core and the first inner cover yarn in a second, opposite direction; and/or the second inner cover yarn is wrapped around the second resilient core in a first direction and the second outer cover yarn is wrapped around the second resilient core and the second inner cover yarn in a second, opposite direction.

6. The belt as claimed in any of claims 1 to 5, **characterized in that** the first yarn comprises a texturised synthetic fibre.

## Patentansprüche

1. Riemen mit einem elastischen Grundkörper auf der Grundlage wenigstens eines thermoplastischen Elastomers oder eines Vulkanisats und mit einer Oberfläche des Gegenstands, die eine Textilauflage trägt, wobei die Textilauflage ein Gewebe ist, das eine Vielzahl von ersten Schussfäden aufweist, die mit einer Vielzahl von zweiten Schussfäden durchsetzt sind, wobei die ersten Schussfäden einen ersten elastischen Kern und wenigstens einen Faden aus synthetischer Faser, der um den ersten elastischen Kern gewickelt ist, aufweisen, um einen ersten umhüllten Garn zu bilden, und wobei die zweiten Schussfäden einen zweiten elastischen Kern und wenigstens einen Faden aus widerstandsfähiger Faser, der um den zweiten elastischen Kern gewickelt ist, aufweisen, um einen zweiten umhüllten Garn zu bilden,
**dadurch gekennzeichnet, dass**
der erste umhüllte Garn und/oder der zweite umhüllte Garn des Gewebes doppelt umhüllter Garn ist oder sind, wobei der doppelt umhüllte Garn einen inneren Hüllgarn und einen äußeren Hüllgarn aufweist, und
dass der erste innere Hüllgarn das gleiche Material wie der erste äußere Hüllgarn aufweist und/oder der zweite innere Hüllgarn das gleiche Material wie der zweite äußere Hüllgarn aufweist.

2. Riemen gemäß Anspruch 1, **dadurch gekennzeichnet, dass** der wenigstens eine Faden aus widerstandsfähiger Faser einen Faden aus chemisch beständiger Faser, einen Faden aus mechanisch widerstandsfähiger Faser und/oder einen Faden aus wärmebeständiger Faser aufweist.

3. Riemen gemäß einem der Ansprüche 1 bis 2, **dadurch gekennzeichnet, dass** der wenigstens eine Faden aus widerstandsfähiger Faser ein aromatisches Polyamid aufweist.

4. Riemen gemäß einem der Ansprüche 1 bis 3, **dadurch gekennzeichnet, dass** der erste elastische Kern eine erste Elastomerfaser aufweist und/oder der zweite elastische Kern eine zweite Elastomerfaser aufweist.

5. Riemen gemäß Anspruch 1, **dadurch gekennzeichnet, dass** der erste innere Hüllgarn in einer ersten Richtung um den ersten elastischen Kern gewickelt ist und der erste äußere Hüllgarn in einer zweiten, entgegengesetzten, Richtung um den ersten elastischen Kern und den ersten inneren Hüllgarn gewickelt ist; und/oder der zweite innere Hüllgarn in einer ersten Richtung um den zweiten elastischen Kern gewickelt ist und der zweite äußere Hüllgarn in einer zweiten, entgegengesetzten, Richtung um den zweiten elastischen Kern und den zweiten inneren Hüllgarn gewickelt ist.

6. Riemen gemäß einem der Ansprüche 1 bis 5, **dadurch gekennzeichnet, dass** der erste Garn eine texturierte synthetische Faser aufweist.

## Revendications

1. Courroie ayant un corps de base élastique basé sur au moins un élastomère thermoplastique ou sur un vulcanisat et ayant une surface côté article portant un revêtement textile, le revêtement textile étant un tissu comprenant une pluralité de premiers fils de trame alternant avec une pluralité de deuxièmes fils de trame, les premiers fils de trame comprenant une première âme élastique et au moins un fil de fibres synthétiques enroulé autour de la première âme élastique pour former un premier fil guipé, et les deuxièmes fils de trame comprenant une deuxième âme élastique et au moins un fil de fibres résistantes enroulé autour de la deuxième âme élastique pour former un deuxième fil guipé,
**caractérisée en ce que**
le premier fil guipé et/ou le deuxième fil guipé du tissu est, ou sont, un fil guipé double, le fil guipé double ayant un fil de guipage interne et un fil de guipage externe, et
**en ce que** le premier fil de guipage interne comprend le même matériau que le premier fil de guipage externe, et/ou le deuxième fil de guipage interne comprend le même matériau que le deuxième fil de guipage externe.

2. Courroie selon la revendication 1, **caractérisée en ce que** l'au moins un fil de fibres résistantes comprend un fil de fibres chimiquement résistantes, un fil de fibres mécaniquement résistantes et/ou un fil de fibres résistantes à la chaleur.

3. Courroie selon l'une quelconque des revendications 1 à 2, **caractérisée en ce que** l'au moins un fil de fibres résistantes comprend un polyamide aromatique.

4. Courroie selon l'une quelconque des revendications 1 à 3, **caractérisée en ce que** la première âme élastique comprend une première fibre élastomère et/ou la deuxième âme élastique comprend une deuxième fibre élastomère.

5. Courroie selon la revendication 1, **caractérisée en ce que** le premier fil de guipage interne est enroulé autour de la première âme élastique dans une première direction et le premier fil de guipage externe est enroulé autour de la première âme élastique et du premier fil de guipage interne dans une deuxième direction, opposée ; et/ou le deuxième fil de guipage interne est enroulé autour de la deuxième âme élastique dans une première direction et le deuxième fil de guipage externe est enroulé autour de la deuxième âme élastique et du deuxième fil de guipage interne dans une deuxième direction, opposée.

6. Courroie selon l'une quelconque des revendications 1 à 5, **caractérisée en ce que** le premier fil comprend une fibre synthétique texturée.
